# EUROPEAN PATENT APPLICATION

(11) **EP 4 306 209 A1**
(43) Date of publication of application: **17.01.2024**
(21) Application number: 22184083.8
(22) Date of filing: 11.07.2022
(51) Int. Cl.: B01J 19/18, B01J 19/20

(54) **GAS PIPING SYSTEM, ARRANGEMENT, USE OF THE GAS PIPING SYSTEM, AND METHOD OF OPERATING A GAS PIPING SYSTEM**

(71) Applicant: Neste Oyj, 02150 Espoo (FI)
(72) Inventor: KORHONEN, Esa, PORVOO (FI); KETOMÄKI, Mika, PORVOO (FI); MATILAINEN, Mikko, PORVOO (FI); UOTILA, Perttu, PORVOO (FI); KETTUNEN, Mika T, PORVOO (FI)
(74) Representative: Laine IP Oy

(57) **Abstract**

According to an example aspect of the present invention, there is provided a gas piping system (1) comprising at least one pipe (2) having a gas inlet (3) for a gas (4) and a gas outlet (5) for the gas (4), wherein the at least one pipe (2) comprises a straight portion (6) along at least a part of a distance between the gas inlet (3) and the gas outlet (5), wherein the gas piping system (1) comprises at least one solid material outlet (25, 26) comprised by the at least one pipe (2), and a unit comprising at least one scraping system (12) coupled to a movement mechanism (11), the unit being arranged at least partially within the at least one pipe (2), wherein the unit is configured to simultaneously allow the gas (4) to flow from the gas inlet (3) to the gas outlet (5) through the scraping system (12), scrape, by movement of the scraping system (12), solid material (8) carried by the gas (4) into the at least one pipe (2) from an inner surface (9) of the straight portion (6) after accumulation of the solid material (8) to the inner surface (9), and convey, by movement of the scraping system (12), scraped solid material (8) towards the at least one solid material outlet (25, 26).

## Description

### FIELD

The present invention relates to a gas piping system. According to certain embodiments, the present invention relates to handling of a gas flow downstream of a reactor, particularly to handling of gases with entrained solids.

Further, the present invention relates to an arrangement comprising a reactor and a gas piping system.

Furthermore, the present invention relates to a use of the gas piping system in connection with a system comprising a reactor.

Additionally, the present invention relates to a method of operating a gas piping system.

### BACKGROUND

In various technical applications gas is guided through a gas piping system. Such gas can carry solid material, for example very small and light-weight particles or dust, within the gas flow. This is particularly problematic in industrial applications, as the solid material can accumulate on an inner surface of the gas piping system over time, which may result in clogging and/or fouling.

For example, polymer waste material may be fed into an arrangement comprising a reactor and then a gas from at least partially pyrolyzed polymer waste is guided through a gas piping system towards a washing and condensation unit to obtain a liquid product. Solid material in the form of light-weight particles or dust may be carried by the gas. As at least a part of the solid material carried by the gas through the gas piping system accumulates on an inner surface of the gas piping system over time, operation of the reactor has to be stopped, at least a part of the arrangement has to cool down, the gas piping system has to be disassembled, the gas piping system has to be cleaned with water utilizing a pressure cleaner and a brush, the gas piping system has to be re-assembled, and then at least a part of the arrangement has to be heated to a sufficient temperature before operation of the reactor can continue. This procedure has to be repeated on a regular basis to avoid clogging of the gas piping system due to solid material accumulation. In some industrial systems such procedure may take, for example, up to two days, in which obtaining the liquid product is interrupted.

In view of the foregoing, it would be beneficial to provide a gas piping system comprising at least one pipe having a gas inlet for a gas and a gas outlet for the gas, wherein the at least one pipe comprises a straight portion along at least a part of a distance between the gas inlet and the gas outlet, wherein the gas piping system is capable of increasing operation time of an arrangement in which the gas piping system is utilized.

### SUMMARY OF THE INVENTION

The invention is defined by the features of the independent claims. Some specific embodiments are defined in the dependent claims.

According to a first aspect of the present invention, there is provided a gas piping system comprising at least one pipe having a gas inlet for a gas and a gas outlet for the gas, wherein the at least one pipe comprises a straight portion along at least a part of a distance between the gas inlet and the gas outlet, wherein the gas piping system further comprises at least one solid material outlet comprised by the at least one pipe, and a unit comprising at least one scraping system coupled to a movement mechanism, the unit being arranged at least partially within the at least one pipe, wherein the unit is configured to simultaneously allow the gas to flow from the gas inlet to the gas outlet through the scraping system, scrape, by movement of the scraping system, solid material carried by the gas into the at least one pipe from an inner surface of the straight portion after accumulation of the solid material to the inner surface, and convey, by movement of the scraping system, scraped solid material towards the at least one solid material outlet.

Various embodiments of the first aspect may comprise at least one feature from the following bulleted list:
- the gas piping system is configured to be coupled to a reactor and the gas comprises entrained solid material
- the gas piping system is configured to be coupled to a reactor such as a pyrolysis reactor or a rotary kiln reactor and the gas comprises gas from at least partially pyrolyzed polymer waste material
- the gas piping system comprises a heating system capable of heating at least a part of the at least one pipe
- the heating system comprises an electric heating system
- the movement mechanism is capable of moving the scraping system along the straight portion
- the movement mechanism is capable of moving the scraping system along the straight portion into a first direction and subsequently into an opposite second direction or continuously along a loop
- the movement mechanism comprises a first wheel arranged at a first end of the at least one pipe, wherein the first wheel is configured to be driven by a motor, a second wheel arranged at a second end of the at least one pipe, and a drive pulley coupled to the scraping system and arranged to move around the first wheel and the second wheel in both directions
- the scraping system comprises a first disc having a first opening, a second disc having a second opening, wherein the second disc is spaced at a distance from the first disc, and a hollow structure arranged between the first disc and the second disc
- the hollow structure is in the form of a hollow cylinder or a hollow conical element
- a diameter of both the first disc and the second disc is almost identical with an inner diameter of the at least one pipe
- the scraping system comprising a rotatable shaftless screw conveyor, and the movement mechanism is coupled to the shaftless screw conveyor, the movement mechanism being capable of rotating the shaftless screw conveyor
- the movement mechanism comprises a plurality of electromagnets distributed along the at least one pipe and the scraping system is made at least partially from magnetic material

According to a second aspect of the present invention, there is provided an arrangement comprising a reactor and a gas piping system according to any one of claims 1 - 10, wherein the gas piping system is coupled to the reactor.

Various embodiments of the second aspect may comprise at least one feature from the following bulleted list:
- the reactor involves gas with entrained solid material
- the reactor is a pyrolysis reactor
- the reactor is a rotary kiln reactor
- the reactor is designed for treatment of polymer waste material,
- the arrangement further comprises a washing and condensation unit
- a gas inlet of the gas piping system is coupled to the reactor and a gas outlet of the gas piping system is coupled to the washing and condensation unit.

According to a third aspect of the present invention, there is provided a use of the gas piping system according to any one of claims 1 - 10 in connection with a system comprising a reactor. The reactor may be designed for treatment of polymer waste material.

According to a fourth aspect of the present invention, there is provided a method of operating a gas piping system, the method comprising providing at least one pipe having a gas inlet for a gas and a gas outlet for the gas, wherein the at least one pipe comprises a straight portion along at least a part of a distance between the gas inlet and the gas outlet, wherein the method further comprises providing at least one solid material outlet comprised by the at least one pipe, and arranging a unit comprising at least one scraping system coupled to a movement mechanism at least partially within the at least one pipe, and simultaneously, by the unit, allowing the gas to flow from the gas inlet to the gas outlet through the at least one scraping system, scraping, by movement of the at least one scraping system, solid material carried by the gas into the at least one pipe from an inner surface of the straight portion after accumulation of the solid material to the inner surface, and conveying, by movement of the at least one scraping system, scraped solid material towards the at least one solid material outlet.

Various embodiments of the fourth aspect may comprise at least one feature from the following bulleted list:
- the method further comprising coupling the gas piping system to a reactor, and coupling the gas piping system to a washing and condensation unit
- the gas comprises gas from at least partially pyrolyzed polymer waste material
- the method further comprising heating at least a part of the at least one pipe by a heating system, preferably an electric heating system

Considerable advantages are obtained by certain embodiments of the invention. A gas piping system comprising at least one pipe having a gas inlet for a gas and a gas outlet for the gas is provided. The gas piping system comprises a unit configured to simultaneously allow the gas to flow from the gas inlet to the gas outlet, scrape solid material carried by the gas into the at least one pipe from an inner surface of the pipe after accumulation of the solid material to the inner surface, and convey the scraped solid material in a direction downstream of the gas flow and/or allow the scraped solid material to be again carried by the gas in the downstream direction. As a consequence, accumulation of solid material on the inner surface of the at least one pipe, which may result in clogging of the at least one pipe, can be avoided or at least reduced. Thus, the gas piping system according to the present invention is capable of increasing operation time of an arrangement in which the gas piping system is utilized.

For example, when arranging the gas piping system according to certain embodiments of the present invention between a reactor designed for treatment of polymer waste material and a washing and condensation unit designed to obtain a liquid product, accumulation of solid material on the inner surface of the at least one pipe can be avoided or at least reduced. Thus, it is not necessary anymore to stop operation of the reactor, to cool down the reactor and the gas piping system, to disassemble the gas piping system, to clean the gas piping system with water utilizing a pressure cleaner, to re-assemble the gas piping system, and then to heat the reactor and the gas piping system to a sufficient temperature before operation of the reactor can continue, or at least the frequency of such procedure can be reduced.

As solid material can be mechanically removed from the inner surface of the at least one pipe during operation of an industrial system, waste water treatment caused by cleaning the at least one pipe with water utilizing a pressure cleaner or similar system can be further avoided or at least reduced. Mechanical removal of the solid material from the inner surface of the at least one pipe is thus more environment friendly than existing solutions and further eliminates or at least reduces resources required for the waste water management.

Additionally, removal of the solid material from the inner surface of the at least one pipe and conveying the solid material towards a solid material outlet decreases the amount of solid material to be washed out from the gas by a washing and condensation unit according to certain embodiments.

### BRIEF DESCRIPTION OF THE DRAWINGS

FIGURE 1 illustrates a schematic view of a gas piping system in accordance with at least some embodiments of the present invention,
FIGURE 2 illustrates a schematic view of another gas piping system in accordance with at least some embodiments of the present invention,
FIGURE 3 illustrates a schematic view of a further gas piping system in accordance with at least some embodiments of the present invention,
FIGURE 4 illustrates a schematic view of a yet further gas piping system in accordance with at least some embodiments of the present invention, and
FIGURE 5 illustrates a schematic view of an arrangement in accordance with at least some embodiments of the present invention.

### EMBODIMENTS

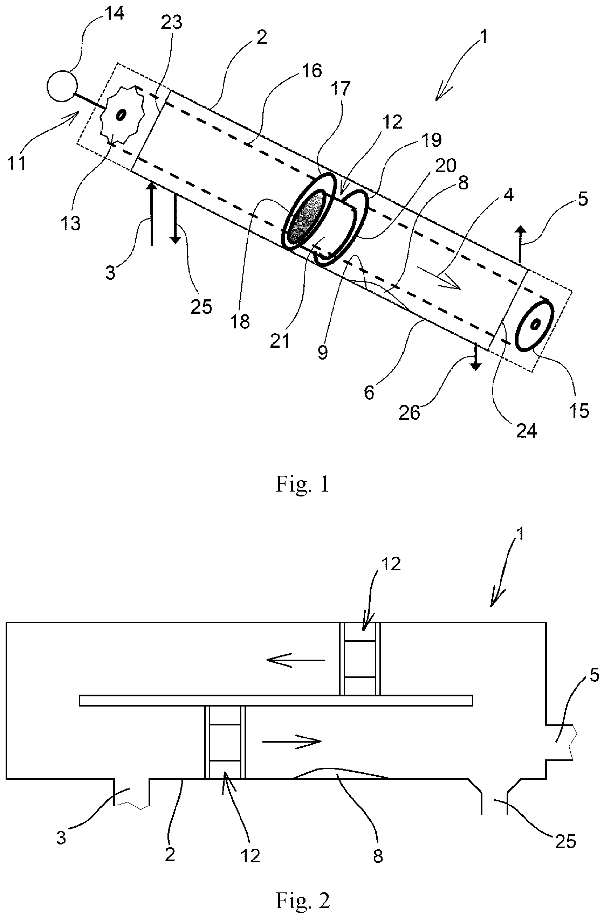

In FIGURE 1 a schematic view of a gas piping system 1 in accordance with at least some embodiments of the present invention is illustrated. As shown, the gas piping system 1 comprises a pipe 2 having a gas inlet 3 for a gas 4 and a gas outlet 5 for the gas 4. The gas piping system 1 may, for example, also comprise a plurality of pipes 2 mechanically connected to each other, wherein the first pipe comprises the gas inlet and the last pipe comprises the gas outlet.

The at least one pipe 2 can be straight along its entire length or comprises a straight portion 6 along at least a part of a distance between the gas inlet 3 and the gas outlet 5. A diameter of the at least one pipe 5 may be, for example, in the range between 150 mm and 400 mm. The at least one pipe 2 may be arranged horizontally or substantially horizontally, for instance. The term "horizontally" means that a longitudinal axis of the at least one pipe 2 is orientated perpendicular to a gravity vector or perpendicular to the normal on the surface of the Earth. Similarly, the term "substantially horizontally" means that a longitudinal axis of the at least one pipe 2 is tilted a few degrees, for example less than 10 degrees, from the axis that is orientated perpendicular to a gravity vector or perpendicular to the normal on the surface of the Earth. However, the longitudinal axis of the at least one pipe 2 may also be tilted more than 10 degrees, for example 30 degrees or 45 degrees.

The gas 4 to be guided through the gas piping system 1 can carry solid material 8 within the gas flow. The solid material 8 is typically in the form of very small and light-weight particles or dust. At least some of the solid material 8 carried by the gas 4 typically accumulates on an inner surface 9 of the at least one pipe 2. In other words, a solid material layer is formed on the inner surface 9 of the at least one pipe 2 over time.

The gas piping system 1 further comprises a unit arranged at least partially within the at least one pipe 2. The shown unit comprises a movement mechanism 11. The movement mechanism 11 comprises a motor 14 coupled to a first wheel 13 to form a driving wheel. The movement mechanism 11 further comprises a second wheel 15, i.e. an idle wheel. The motor 14 and the first wheel 13 are arranged at a first end 23 of the at least one pipe 2. Typically, the motor 14 and the first wheel 13 are arranged external to or outside of the at least one pipe 2, but adjacent to the at least one pipe 2. The second wheel 15 is arranged at a second end 24 of the at least one pipe 2. The second wheel 15 is typically arranged external to or outside of the at least one pipe 2, but adjacent to the at least one pipe 2. Additionally, the movement mechanism 11 further comprises a drive pulley 16, for example a chain or a cable, arranged around the first wheel 13 and the second wheel 15. The drive pulley 16 can be moved around the first wheel 13 and the second wheel 14 in clockwise and in anti-clockwise direction by means of the motor 14.

The shown unit further comprises a scraping system 12 coupled to the drive pulley 16. The scraping system 12 comprises a first disc 17 having a first opening 18, a second disc 19 having a second opening 20, wherein the second disc 19 is spaced at a distance from the first disc 17, and a hollow structure 21 arranged between the first disc 17 and the second disc 19. The hollow structure 21 may be, for example, in the form of a hollow cylinder as shown in FIGURE 1 or a hollow conical element, for instance. In case of a hollow conical element, a diameter of the second opening is greater than a diameter of the first opening provided upstream of the second opening. The hollow structure 21 is arranged such that the gas 4 can flow through the first opening 18, the second opening 20 and the hollow structure 21 of the scraping system 12. The first opening 17 and the second opening 19 are typically dimensioned such that a pressure drop is less than 1 kPa in order to avoid restriction of the gas flow through the at least one pipe 2. The first disc 17 and the second disc 19 are arranged perpendicular or substantially perpendicular to the direction of the gas flow through the at least one pipe 2. A diameter of both the first disc 17 and the second disc 19 is almost identical with an inner diameter of the at least one pipe 2, but slightly smaller. The difference between the inner diameter of the pipe 2 and the diameter of both the first disc 17 and the second disc 19 may be, for example, in the range between 1 mm and 10 mm. The first opening 18 of the first disc 17, the second opening 20 of the second disc 19 and the hollow structure 21 between the first disc 17 and the second disc 19 may be arranged co-axially with the longitudinal axis of the at least one pipe 2, i.e. in the centre of the at least one pipe 2. However, the first disc 17 and the second disc 19 may also each have an eccentric opening 18, 20. In such a case, the hollow structure 21 may be positioned accordingly as shown in FIGURE 1.

As a consequence, the unit is configured to simultaneously allow the gas 4 to flow from the gas inlet 3 to the gas outlet 5 through the scraping system 12, to scrape solid material 8 carried by the gas 4 into the at least one pipe 2 from the inner surface 9 of a straight portion 6 of the at least one pip 2 by means of moving the scraping system 12 after accumulation of the solid material 8 to the inner surface 9, and convey at least a part of the scraped solid material 8 towards at least one solid material outlet 25, 26 by means of moving the scraping system 12. A part of the scraped solid material 8 may be again carried by the gas 4 in the downstream direction due to the scraping and the gas flow.

For example, a first solid material outlet 25 may be provided at the first end 23 of the at least one pipe and a second solid material outlet 26 may be provided at the second end 24 of the at least one pipe 2. When the scraping system 12 is moved by the movement mechanism 11 in the downstream direction towards the second end 24, solid material 8 is scraped by the scraping system 12 from the inner surface 9 of the at least one pipe 2 and conveyed towards the second solid material outlet 26. A part of the scraped solid material 8 may be carried again by the gas 4 in the downstream direction. When the scraping system 12 is moved into the opposite direction, i.e. in the upstream direction, solid material 8 is scraped by the scraping system 12 from the inner surface 9 of the at least one pipe 2 and conveyed towards the first solid material outlet 25. A part of the scraped solid material 8 may be carried again by the gas 4 and guided through the first opening 18 of the first disc 17, the hollow cylinder 21 and the second opening 20 of the second disc 19 in the downstream direction.

The gas piping system 1 typically comprises a heating system (not shown) capable of heating at least a part of the at least one pipe 2. The heating system may be, for example, an electric heating system. The heating system is typically arranged outside of the at least one pipe 2 and capable of heating a wall of the at least one pipe 2. The heating system is typically arranged within a housing (not shown), particularly between the at least one pipe 2 and a thermal insulator (not shown) arranged within the housing. The temperature within the at least one pipe 2 can be adjusted by means of the heating system. For example, the heating system may be capable of increasing the temperature within the at least one pipe 2 from ambient temperature to a temperature in the range between 200°C and 500°C, for example in the range between 400°C and 500°C, by heating the wall of the at least one pipe 2.

According to another embodiment, the movement mechanism comprises a plurality of electromagnets distributed along the at least one pipe 2. In such a case, the scraping system 12 described above is made at least partially from magnetic material. As a consequence, the scraping system 12 can be moved along the straight portion 6 of the at least one pipe 2 by controlling an amount of electric current through the electromagnets in order to produce a magnetic field. The electromagnets are typically arranged outside of the at least one pipe 2. One advantage of providing a movement mechanism comprising electromagnets is that the movement mechanism is not in contact with solid material 8 during operation.

In FIGURE 2 a schematic view of another gas piping system 1 in accordance with at least some embodiments of the present invention is illustrated. The gas piping system 1 comprises at least one pipe 2 comprising a gas inlet 3 for a gas and a gas outlet 5 for the gas. The at least one pipe 2 is connected to further pipes, thus forming a loop. At least one scraping system 12, for example two or more scraping systems 12, are comprised by the gas piping system 1. Each scraping system 12 may be, for example, designed as described above in connection with FIGURE 1. The gas piping system 1 further comprises a movement mechanism (not shown). The movement mechanism may, for example, comprise a plurality of wheels and a drive pulley coupled to each scraping system 12, wherein the drive pulley is arranged around the plurality of wheels, thus forming a closed trajectory for each scraping system 12. Scraping systems 12 may be moved simultaneously along the loop by movement of the drive pulley in anti-clockwise or clockwise direction. Typically, the scraping systems 12 are moved as indicated by the arrows in order to convey solid material 8 in a downstream direction from the gas inlet 3 towards to gas outlet 5. Alternatively, the movement. mechanism may comprise a plurality of electromagnets distributed along the loop. In such a case, each scraping system 12 is made at least partially from magnetic material. As a consequence, each scraping system 12 can be moved along the loop by controlling an amount of electric current through the electromagnets in order to produce a magnetic field. The electromagnets are typically arranged outside of the loop. One advantage of providing a movement mechanism comprising electromagnets is that the movement mechanism is not in contact with solid material 8 during operation. A heating system (not shown) may be further provided as described above in connection with FIGURE 1.

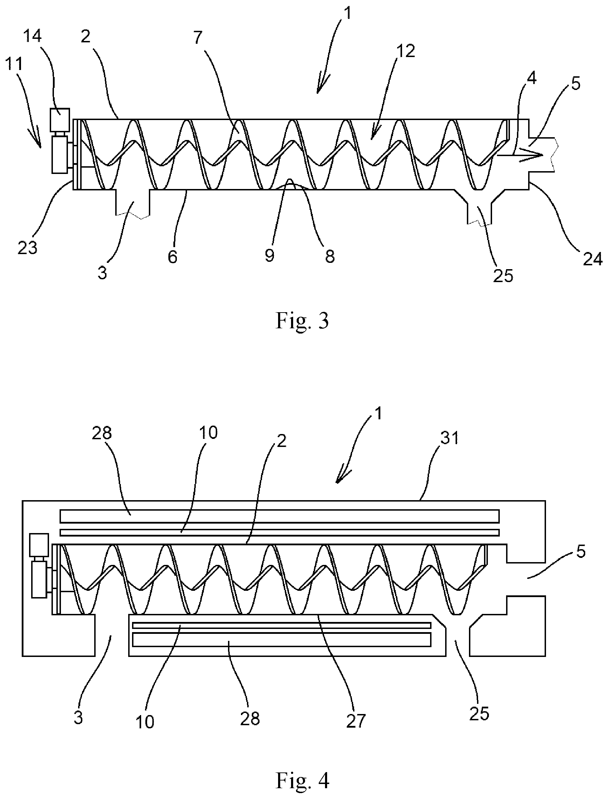

In FIGURE 3 a schematic view of a further gas piping system 1 in accordance with at least some embodiments of the present invention is illustrated. As shown, the gas piping system 1 comprises a pipe 2 having a gas inlet 3 for a gas 4 and a gas outlet 5 for the gas 4. The gas piping system 1 may, for example, also comprise a plurality of pipes 2 mechanically connected to each other, wherein the a first pipe comprises the gas inlet and the last pipe comprises the gas outlet.

The at least one pipe 2 can be straight along its entire length or comprises a straight portion 6 along at least a part of a distance between the gas inlet 3 and the gas outlet 5. A diameter of the at least one pipe 5 may be, for example, in the range between 150 mm and 400 mm. The at least one pipe 2 may be arranged horizontally or substantially horizontally, for instance. The term "horizontally" means that a longitudinal axis of the at least one pipe 2 is orientated perpendicular to a gravity vector or perpendicular to the normal on the surface of the Earth. Similarly, the term "substantially horizontally" means that a longitudinal axis of the at least one pipe 2 is tilted a few degrees, for example less than 10 degrees, from the axis that is orientated perpendicular to a gravity vector or perpendicular to the normal on the surface of the Earth. However, the longitudinal axis of the at least one pipe 2 may also be tilted more than 10 degrees, for example 30 degrees or 45 degrees.

The gas 4 to be guided through the gas piping system 1 can carry solid material 8 within the gas flow. The solid material 8 is typically in the form of very small and light-weight particles or dust. At least some of the solid material 8 carried by the gas 4 typically accumulates on an inner surface 9 of the at least one pipe 2. In other words, a solid material layer is formed on the inner surface 9 of the at least one pipe 2 over time.

The gas piping system 1 further comprises a unit arranged at least partially within the at least one pipe 2. The shown unit comprises a movement mechanism 11 comprising a motor 14 coupled to a scraping system 12 comprising a shaftless screw conveyor 7. The shaftless screw conveyor 7 has a structure forming an elongated opening in its centre along its length. Thus, the gas 4 is allowed to flow from the gas inlet 3 to the gas outlet 5 through the elongated opening. The shaftless screw conveyor 7 can be rotated by the motor 14. Rotation of the shaftless screw conveyor 7 causes scraping of solid material 8 carried by the gas 4 into the at least one pipe 2 from the inner surface 9 of the straight portion 6 after accumulation of the solid material 8 to the inner surface 9. Rotation of the shaftless screw conveyor 7 further causes conveying the scraped solid material 8 towards the solid material outlet 25. Scraping of the solid material 8 by the shaftless screw conveyor 7 may further result in that at least a part of the scraped solid material 8 is again carried by the gas 4 in a downstream direction. The gas piping system 1 may comprise a plurality of solid material outlets between the gas inlet 3 and the gas outlet 5. Typically, the shaftless screw conveyor 7 is rotated only into one direction to convey scraped solid material 8 in a direction downstream. The motor 14 is typically arranged external to or outside of the at least one pipe 2, but adjacent to the at least one pipe 2.

A diameter of the shaftless screw conveyor 7 is almost identical with an inner diameter of the at least one pipe 2, but slightly smaller. The difference between the inner diameter of the pipe 2 and the diameter of the shaftless screw conveyor 7 may be, for example, in the range between 1 mm and 10 mm.

As a consequence, the unit is configured to simultaneously allow the gas 4 to flow from the gas inlet 3 to the gas outlet 5 via the elongated opening, to scrape solid material 8 carried by the gas 4 into the at least one pipe 2 from the inner surface 9 of a straight portion 6 of the at least one pip 2 by means of rotating the shaftless screw conveyor 7 after accumulation of the solid material 8 to the inner surface 9, and convey the scraped solid material 8 towards the solid material outlet 25 and/or allow the scraped solid material 8 to be again carried by the gas 4 in the downstream direction.

The gas piping system 1 typically comprises a heating system (not shown) capable of heating at least a part of the at least one pipe 2. The heating system may be, for example, an electric heating system. The heating system is typically arranged outside of the at least one pipe 2 and capable of heating a wall of the at least one pipe 2 as shown in FIGURE 3.

In FIGURE 4 a schematic view of a yet further gas piping system 1 in accordance with at least some embodiments of the present invention is illustrated. The gas piping system 1 comprises the features described above in connection with FIGURE 3. Additionally, the gas piping system 1 comprises a heating system 10, for example an electric heating system. The heating system 10 is arranged within a housing 31, but outside of the at least one pipe 2 and capable of heating a wall 27 of at least a part of the at least one pipe 2. The heating system 10 is arranged between the at least one pipe 2 and a thermal insulator 28 arranged within the housing 31. The temperature within the at least one pipe 2 can be adjusted by means of the heating system 10. For example, the heating system 10 may be capable of increasing the temperature within the at least one pipe 2 from ambient temperature to a temperature in the range between 200°C and 500°C, for example in the range between 400°C and 500°C, by heating the wall 27.

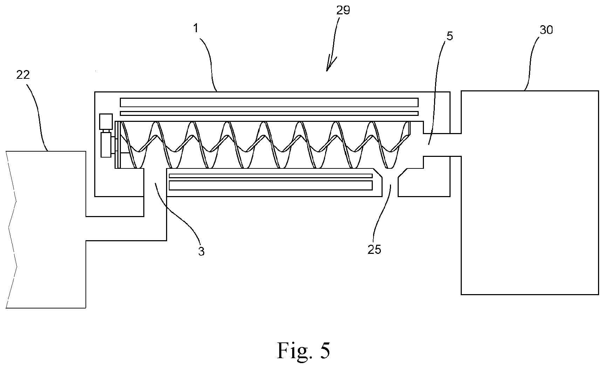

In FIGURE 5 a schematic view of an arrangement 29 in accordance with at least some embodiments of the present invention is illustrated. The arrangement comprises at least a reactor 22 and a gas piping system 1. The reactor 22 involves gas with entrained solids. For example, polymer waste material can be treated by pyrolysis, i.e. by thermal decomposition of the polymer waste material at elevated temperatures in presence of no or low amount of oxygen to avoid burning of forming hydrocarbons, in order to obtain an intermediate product comprising a gas from at least partially pyrolyzed polymer waste. Such treatment may, for example, take place in a reactor 22, such as a rotary kiln reactor, into which polymer waste is fed. The intermediate product comprising the gas from at least partially pyrolyzed polymer waste may then be guided away from the reactor 22 via a gas piping system 1, for example to a washing and condensation unit 30. The gas may carry solid material in the form of very small and lightweight particles or dust from the reactor 22 through the gas piping system 1 towards the washing and condensation unit 30. Reactors 22 and washing and condensation units 30 are commonly known in various forms as such.

The shown arrangement 29 comprises a reactor 22, for example for treatment of polymer waste material, a gas piping system 1 as described above in connection with FIGURES 3 and 4 as well as a washing and condensation unit 30 for obtaining a liquid product. Of course, also the gas piping system 1 described above in connection with FIGURE 1 or FIGURE 2 may be alternatively utilized, for instance. The gas piping system 1 is coupled to both the reactor 22 and the washing and condensation unit 30. Particularly, the gas inlet 3 is coupled to the reactor 22 and the gas outlet 5 is coupled to the washing and condensation unit 30.

By arranging the gas piping system 1 between the reactor 22 and the washing and condensation unit 30, accumulation of solid material on the inner surface of the at least one pipe can be avoided or at least reduced. Thus, it is not necessary anymore to stop operation of the reactor 22, to cool down the reactor 22 and the gas piping system 1, to disassemble the gas piping system 1, to clean the gas piping system 1 with water utilizing a pressure cleaner, to re-assemble the gas piping system 1, and then to heat the reactor 22 and the gas piping system 1 to a sufficient temperature before operation of the reactor 22 can continue, or at least the frequency of such procedure can be reduced. In other words, operation time of the arrangement 29 in which the gas piping system 1 is utilized can be increased. The gas piping system 1 further decreases the amount of solid material 8 to be washed out of the gas by the washing and condensation unit 30.

The heating system comprised by the gas piping system 1 furthermore prevents condensation of the gas within the gas piping system 1 arranged prior to the washing and condensation unit 30. Furthermore, accumulation of the sticky solid material on the inner surface of the at least one pipe decreases due to heating.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in polymer waste material treatment.

### REFERENCE SIGNS LIST

- 1: gas piping system
- 2: pipe
- 3: gas inlet
- 4: gas
- 5: gas outlet
- 6: straight portion
- 7: shaftless screw conveyor
- 8: solid material
- 9: inner surface
- 10: heating system
- 11: movement mechanism
- 12: scraping system
- 13: first wheel
- 14: motor
- 15: second wheel
- 16: drive pulley
- 17: first disc
- 18: first opening
- 19: second disc
- 20: second opening
- 21: hollow structure
- 22: reactor
- 23: first end
- 24: second end
- 25: first solid material outlet
- 26: second solid material outlet
- 27: wall
- 28: thermal insulator
- 29: arrangement
- 30: washing and condensation unit
- 31: housing

## Claims

1. A gas piping system (1) comprising:
- at least one pipe (2) having a gas inlet (3) for a gas (4) and a gas outlet (5) for the gas (4), wherein the at least one pipe (2) comprises a straight portion (6) along at least a part of a distance between the gas inlet (3) and the gas outlet (5),
**characterized by**
- at least one solid material outlet (25, 26) comprised by the at least one pipe (2), and
- a unit comprising at least one scraping system (12) coupled to a movement mechanism (11), the unit being arranged at least partially within the at least one pipe (2), wherein the unit is configured to simultaneously
∘ allow the gas (4) to flow from the gas inlet (3) to the gas outlet (5) through the at least one scraping system (12),
∘ scrape, by movement of the at least one scraping system (12), solid material (8) carried by the gas (4) into the at least one pipe (2) from an inner surface (9) of the straight portion (6) after accumulation of the solid material (8) to the inner surface (9), and
∘ convey, by movement of the at least one scraping system (12), scraped solid material (8) towards the at least one solid material outlet (25, 26).

2. The gas piping system (1) according to claim 1, wherein the gas piping system (1) is configured to be coupled to a reactor (22) and the gas comprises entrained solid material (8).

3. The gas piping system (1) according to claim 1 or 2, wherein the gas piping system (1) is configured to be coupled to a reactor (22) and the gas (4) comprises gas from at least partially pyrolyzed polymer waste material.

4. The gas piping system (1) according to any one of claims 1 - 3, wherein the gas piping system (1) comprises a heating system (10) capable of heating at least a part of the at least one pipe (2).

5. The gas piping system (1) according to any one of claims 1 - 4, wherein the movement mechanism (11) is capable of moving the scraping system (12) along the straight portion (6).

6. The gas piping system (1) according to claim 5, wherein the movement mechanism (11) is capable of moving the at least one scraping system (12) along the straight portion (6) into a first direction and subsequently into an opposite second direction or continuously along a loop.

7. The gas piping system (1) according to any one of claims 1 - 6, wherein the movement mechanism (11) comprises:
- a first wheel (13) arranged at a first end of the at least one pipe (2), wherein the first wheel (13) is configured to be driven by a motor (14),
- a second wheel (15) arranged at a second end of the at least one pipe (2), and
- a drive pulley (16) coupled to the scraping system (12) and arranged to move around the first wheel (13) and the second wheel (15) in both directions.

8. The gas piping system (1) according to any one of claims 1 - 7, wherein the scraping system (12) comprises:
- a first disc (17) having a first opening (18),
- a second disc (19) having a second opening (20), wherein the second disc (19) is spaced at a distance from the first disc (17), and
- a hollow structure (21) arranged between the first disc (17) and the second disc (19).

9. The gas piping system (1) according to any one of claims 1 - 4, wherein the the scraping system (12) comprises a rotatable shaftless screw conveyor (7), and the movement mechanism (11) is coupled to the shaftless screw conveyor (7), the movement mechanism (11) being capable of rotating the shaftless screw conveyor (7).

10. The gas piping system (1) according to any one of claims 1 - 4, wherein the movement mechanism (11) comprises a plurality of electromagnets distributed along the at least one pipe (2) and the scraping system (2) is made at least partially from magnetic material.

11. An arrangement (29) comprising:
- a reactor (22), and
- a gas piping system (1) according to any one of claims 1 - 10,
- wherein the gas piping system (1) is coupled to the reactor (22).

12. Use of the gas piping system according to any one of claims 1 - 10 in connection with a system comprising a reactor (22).

13. A method of operating a gas piping system (1), the method comprising:
- providing at least one pipe (2) having a gas inlet (3) for a gas (4) and a gas outlet (5) for the gas (4), wherein the at least one pipe (2) comprises a straight portion (6) along at least a part of a distance between the gas inlet (3) and the gas outlet (5),
**characterized by**
- providing at least one solid material outlet (25, 26) comprised by the at least one pipe (2), and
- arranging a unit comprising at least one scraping system (12) coupled to a movement mechanism (11) at least partially within the at least one pipe (2), and
- simultaneously, by the unit, allowing the gas (4) to flow from the gas inlet (3) to the gas outlet (5) ) through the at least one scraping system (12), scraping, by movement of the at least one scraping system (12), solid material (8) carried by the gas (4) into the at least one pipe (2) from an inner surface (9) of the straight portion (6) after accumulation of the solid material (8) to the inner surface (9), and conveying, by movement of the at least one scraping system (12), scraped solid material (8) towards the at least one solid material outlet (25, 26).

14. The method according to claim 13, wherein the method further comprises:
- coupling the gas piping system (1) to a reactor (22), and
- coupling the gas piping system (1) to a washing and condensation unit (30).

15. The method according to claim 13 or 14, wherein the gas (4) comprises gas from at least partially pyrolyzed polymer waste material.

16. The method according to any one of claims 13 - 15, wherein the method further comprises heating at least a part of the at least one pipe (2) by a heating system (10).
